# EUROPÄISCHE PATENTSCHRIFT

(11) **EP 2 557 663 B1**
(45) Veröffentlichungstag und Bekanntmachung des Hinweises auf die Patenterteilung: **20.05.2020**
(21) Anmeldenummer: 12168603.4
(22) Anmeldetag: 21.05.2012
(51) Int. Cl.: H02K 3/51

(54) **Rotierende elektrische Maschine**
Rotating electric machine
Machine à rotation électrique

(30) Priorität: 11.08.2011 DE 102011109953
(43) Veröffentlichungstag der Anmeldung: 13.02.2013
(73) Patentinhaber: GE Renewable Technologies, 38100 Grenoble (FR)
(72) Erfinder: Cifyildiz, Serdar, 8400 Winterthur (CH); Schwery, Alexander, 5024 Küttigen (CH); Okai, Ricardo, 5442 Fislisbach (CH); Walser, Hanspeter, 4712 Laupersdorf (CH); Schmid, Matthias, 5413 Birmenstorf (CH)
(74) Vertreter: COPA Copenhagen Patents

(56) Entgegenhaltungen:
- EP-A2- 0 736 953
- WO-A1-2008/119661
- DE-C- 573 444
- US-A- 2 712 085
- US-A- 5 264 750

## Beschreibung

### TECHNISCHES GEBIET

Die vorliegende Erfindung bezieht sich auf das Gebiet der elektrischen Maschinen. Sie betrifft eine rotierende elektrische Maschine, insbesondere einen Hydro-Generator, gemäß dem Oberbegriff des Anspruchs 1.

### STAND DER TECHNIK

Die Erfindung bezieht sich auf einen Rotor einer elektrischen Maschine, insbesondere einen Hydro-Generator, wie er beispielsweise bei Pumpspeicherwerken eingesetzt wird, mit einem Rotorkörper, der aus lamellierten Blechen aufgebaut und durch axiale Spannbolzen zusammengehalten wird. Am Aussenumfang des Rotorkörpers sind axiale Wicklungsnuten angeordnet, in die eine Rotorwicklung eingelegt und dort gegen Fliehkrafteinwirkung gehalten ist. Die aus dem Rotorkörper axial austretenden, einen Wickelkopf bildenden Wicklungsstäbe sind durch spezielle Abstützmittel gegen Fliehkrafteinwirkung gesichert.

Bei solchen Maschinen ist der Wickelkopf am Rotor extremen mechanischen und thermischen Belastungen ausgesetzt. Die Wickelkopfabstützung gegen Fliehkräfte kann dabei mittels Bandagen aus vorgespanntem Stahldraht in Kombination mit einem massiven einteiligen Stahlring .erfolgen. Durch die aufwendigen Montagehilfsmittel, die Transportabmessungen und durch die Gewichtslimitierung des Rotors ergeben sich jedoch Grenzen. Für Rotoren von Wasserkraftmaschinen mit großen Dimensionen muss der Zusammenbau direkt auf einem Montageplatz im Kraftwerk erfolgen können. Darüber hinaus beeinträchtigen große massive Stahlringe die Durchströmung des Wickelkopfes und damit dessen Kühlung.

Die Druckschrift WO 2008/119661 A1 beschreibt einen Rotor nach dem Oberbegriff des Anspruchs 1.

Aus der Druckschrift DE 195 13 457 ist es nun bekannt, an den Endblechen des Rotorkörpers Pressfinger anzuordnen, sowie einen Stützring aus mindestens zwei von in Axialrichtung beabstandeten Ringen vorzusehen, die sich an ihrem Innenumfang auf der Nabe abstützen, wobei die Ringe im achsnahen Abschnitt des Rotorkörpers zusammen mit den Pressfingern mit dem den Rotorkörper axial durchsetzenden ersten Zugbolzen zusammengespannt sind. Im achsferneren Abschnitt sind zweite Zugbolzen vorgesehen, welche nur die besagten Ringe axial durchsetzen und die Ringe axial zusammenspannen. Schliesslich sind dritte, den Wickelkopf radial durchsetzende Zugbolzen vorgesehen, welche zumindest am Aussenumfang des axial gesehen äußersten Ringes angreifen.

Am Außenumfang aller Ringe ist in Umfangsrichtung verteilt eine Vielzahl von axial verlaufenden, miteinander fluchtenden, halbgeschlossene Nuten vorgesehen, in welche je ein mit radial verlaufenden Gewindebohrungen versehenes Lineal geschoben ist, in welche Gewindebohrungen die besagten dritten Zugbolzen eingeschraubt sind. Dies ergibt eine einfach herzustellende und sichere radiale Abstützung.

Die axiale thermische Dehnung der Wicklung bei Erwärmung kann bei dieser bekannten Anordnung jedoch dazu führen, dass die Wicklung auf die Wickelkopfbolzen (die dritten Bolzen) drückt und diese so eine unerwünschte und nicht tolerierbare Biegung erfahren.

In der Druckschrift WO 2010/115481 ist zur Vermeidung dieser Probleme eine dynamoelektrische Maschine vorgeschlagen worden, mit einem Rotorballen, einem ringförmigen Wickelkopf, der axial neben dem Rotorballen und zu diesem koaxial angeordnet ist und einem Tragring, der radial innerhalb des Wickelkopfes und zu diesem koaxial angeordnet ist, wobei Wickelkopf und Tragring mit dem Rotorballen drehfest verbunden sind und Wickelkopf und Tragring in radialer Richtung durch Zugstäbe miteinander verspannt sind, die durch Radialbohrungen in den Wickelköpfen und im Tragring hindurchgeführt sind. Die Zugstäbe greifen dabei mit ihren radial inneren Enden am Tragring und mit ihren radial äußeren Enden an Lagerkörpern an, die am Wickelkopf anliegen. Die lichten Weiten der Radialbohrungen im Tragkörper weisen gegenüber den Durchmessern der Zugstäbe Übermaß auf und die Lagerung der radial inneren Enden der Zugstäbe am Tragring und der radial äußeren Enden der Zugstäbe am Wickelkopf erlaubt eine begrenzte Kippbewegung der Zugstäbe gegen die Radialrichtung. Dies wird insbesondere dadurch erreicht, dass wenigstens einige der Enden der Zugstäbe mittels Lagerkörpern gelagert sind, die eine sphärische Lagerfläche aufweisen.

Nachteilig ist bei dieser Lösung jedoch, dass alle Zugstäbe einzeln für eine Kippbewegung vorbereitet werden müssen, was einen erheblichen konstruktiven und montagetechnischen Aufwand zur Folge hat.

### DARSTELLUNG DER ERFINDUNG

Es ist daher eine Aufgabe der Erfindung, eine rotierende elektrische Maschine der eingangs genannten Art zu schaffen, welche die Nachteile der bekannten Maschinen im Bezug auf die Fliehkraftsicherung der Wickelköpfe vermeidet und sich durch eine konstruktiv einfache und wirksame Neutralisierung der thermischen Ausdehnung der Wickelköpfe auszeichnet.

Die Aufgabe wird durch eine rotierende elektrische Maschine, insbesondere Hydro-Generator, mit einem Rotor gemäß dem Anspruch 1 gelöst.

Gemäss einer Ausgestaltung der Erfindung sind die Bolzen als Schraubbolzen ausgebildet und in das T-Hammerprofil eingeschraubt.

Eine andere Ausgestaltung der Erfindung zeichnet sich dadurch aus, dass in axialer Richtung jeweils mehrere Bolzen mit derselben radialen Ausrichtung hintereinander angeordnet sind, und dass alle Bolzen derselben radialen Ausrichtung an einem gemeinsamen T-Hammerprofil befestigt bzw. in ein gemeinsames T-Hammerprofil eingeschraubt sind.

Insbesondere wirken alle Bolzen derselben radialen Ausrichtung über ein gemeinsames Halteelement von außen auf den Wickelkopf ein.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einer perspektivischen Seitenansicht einen Ausschnitt aus einem Rotor einer rotierende elektrische Maschine gemäß einem Ausführungsbeispiel der Erfindung; und
- Fig. 2: die Anordnung und Befestigung des Wickelkopfes bei der Maschine aus Fig. 1 in einer Ansicht quer zur Maschinenachse (Fig. 2a) und in einer Ansicht in Achsenrichtung (Fig. 2b).

### WEGE ZUR AUSFÜHRUNG DER ERFINDUNG

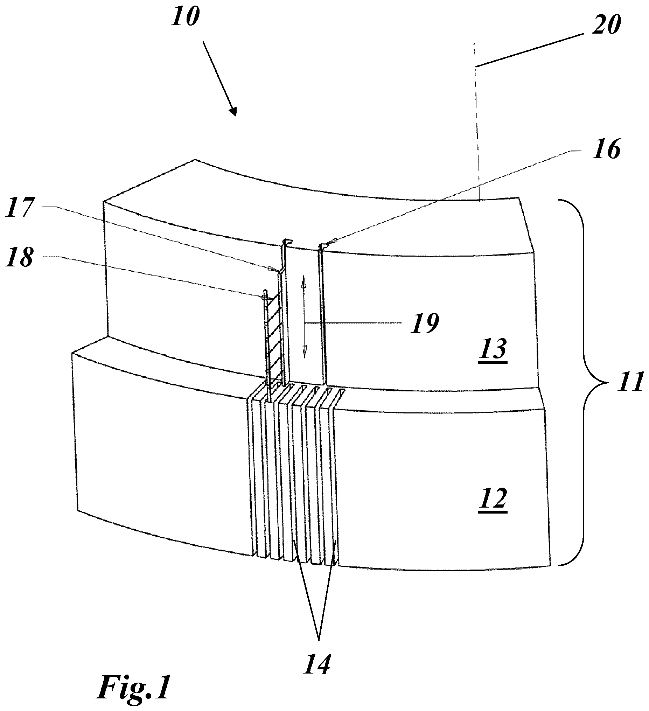

Fig. 1 zeigt in einer perspektivischen Seitenansicht einen Ausschnitt aus einem Rotor einer rotierenden elektrischen Maschine 10 gemäß einem Ausführungsbeispiel der Erfindung. Der Rotor 11, von dem nur ein Ausschnitt zu sehen ist, erstreckt sich entlang einer Maschinenachse 20 und umfasst einen Rotorkörper beziehungsweise ein Rotorblechpaket 12, an welches an dem dargestellten Ende ein Wickelkopf-Rim 13 anschliesst.

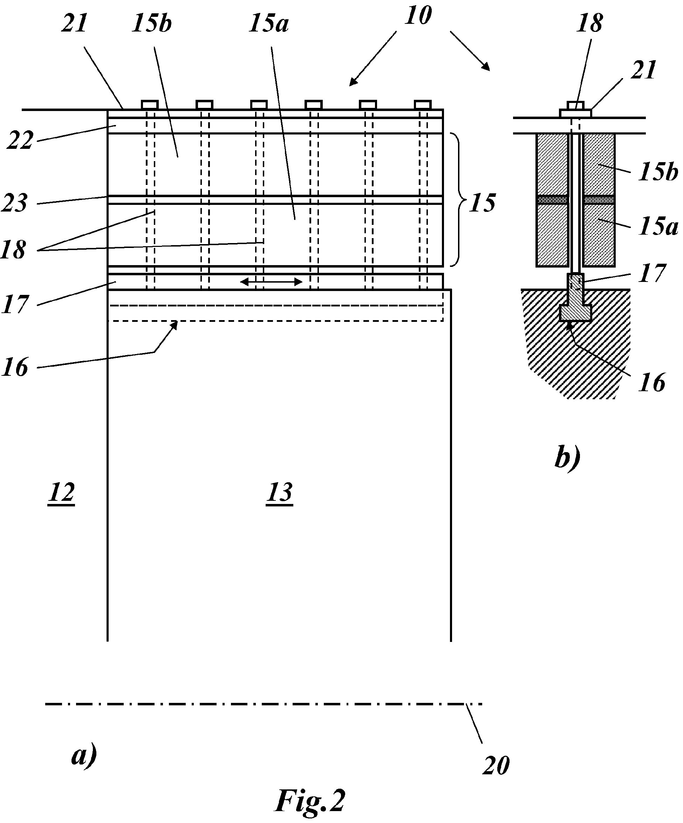

Auf dem Außenumfang des Rotorblechpakets 12 sind axiale Wicklungsnuten angeordnet, welche die (nicht dargestellte) Rotorwicklung aufnehmen. Die aus dem Rotorblechpaket 12 heraustretenden frei liegenden Wicklungsstäbe (15a,b in Fig. 2) bilden einen Wickelkopf (15 in Fig. 2), der gegen die beim Betrieb der Maschine auftretenden Zentrifugalkräfte (Fliehkräfte) abgestützt werden muss.

Hierzu sind im Bereich des Wickelkopfes 15 radial orientierte Bolzen 18 vorgesehen, die durch den Wickelkopf 15 hindurch reichen und am Wickelkopf-Rim 13 befestigt sind. Um eine freie axiale Ausdehnung des Wickelkopfes 15 und dessen Befestigung zu ermöglichen, muss die ganze Wickelkopf-Befestigung die thermischen Ausdehnungen der Wicklung kompensieren. Bei der vorgeschlagenen Lösung wird dies dadurch erreicht, dass sich die Wickelkopf-Befestigung in axialer Richtung bewegen kann. Für jede axiale Reihe von Bolzen 18 mit gleicher radialer Ausrichtung ist jeweils ein gemeinsames, sich axial erstreckendes T-Hammerprofil 17 vorgesehen, an welchem die Bolzen 18 für den Wickelkopf 15 befestigt sind. Das T-Hammerprofil 17 ist dazu mit entsprechend beabstandeten Gewindelöchern versehen, in welche die als Gewindebolzen ausgebildeten Bolzen 18 mit ihren inneren Enden eingeschraubt sind. Die T-Hammerprofile 17 sind in axial orientierten, angepassten T-Nuten 16 des Wickelkopf-Rims 13 axial geführt. Auf der Aussenseite stützen sich die Bolzen 18 mit ihrem Kopf an einem gemeinsamen, sich axial erstreckenden Halteelement 21 ab, welches beispielsweise über eine Unterlage 22 radialen Druck auf den Wickelkopf 15 ausübt. Zwischen den Wicklungsstäben 15a und 15b können Zwischenlagen 23 angeordnet sein, um die auftretenden Kräfte gleichmäßig in den Wickelkopf 15 einzuleiten.

Durch den gezeigten Aufbau des Wickelkopfes 15 und seiner Befestigung am Wickelkopf-Rim 13 wird erreicht, dass einerseits die im Betrieb am Wickelkopf 15 auftretenden Fliehkräfte aufgefangen und in den Wickelkopf-Rim 13 eingeleitet werden, und dass andererseits die thermische Ausdehnung der Wicklung keine Scherkräfte an den Bolzen 18 aufbaut, weil diese sich kollektiv mit der gesamten Befestigung relativ zum Wickelkopf-Rim 13 in der in Fig. 1 eingezeichneten axialen Bewegungsrichtung 19 bewegen können, indem das T-Hammerprofil 17 in der T-Nut 16 in axialer Richtung gleitet.

### BEZUGSZEICHENLISTE

- 10: rotierende elektrische Maschine (insb. Hydro-Generator)
- 11: Rotor
- 12: Rotorblechpaket
- 13: Wickelkopf-Rim
- 14: Wicklungsnut
- 15: Wickelkopf
- 15a,b: Wicklungstab
- 16: T-Nut
- 17: T-Hammerprofil
- 18: Bolzen
- 19: Bewegungsrichtung
- 20: Maschinenachse
- 21: Halteelement
- 22: Unterlage
- 23: Zwischenlage

## Patentansprüche

1. Rotierende elektrische Maschine (10), insbesondere Hydro-Generator, mit einem Rotor (11), welcher ein sich in Richtung einer Maschinenachse (20) erstreckendes Rotorblechpaket (12) mit einer Rotorwicklung (15a,b) umfasst, wobei die Rotorwicklung (15a,b) an den Enden des Rotorblechpakets (12) jeweils einen Wickelkopf (15) ausbildet, der zum Abfangen von Zentrifugalkräften mittels radial durch den Wickelkopf (15) hindurchgehender Bolzen (18) an einem sich in axialer Richtung an das Rotorblechpaket (12) anschliessenden, konzentrisch innerhalb des Wickelkopfes (15) angeordneten Wickelkopf-Rim (13) befestigt ist, und wobei die Befestigung (16, 17, 18, 21) zur sicheren Aufnahme von axialen Dehnungen des Wickelkopfes (15) ausgebildet ist, wobei die Bolzen (18) am Wickelkopf-Rim (13) jeweils an einem sich in axialer Richtung erstreckenden T-Hammerprofil (17) befestigt sind, **dadurch gekennzeichnet, dass** das T-Hammerprofil axial verschieblich in einer zugehörigen axialen T-Nut im Wickelkopf-Rim (13) gelagert ist.

2. Rotierende elektrische Maschine nach Anspruch 1, **dadurch gekennzeichnet, dass** die Bolzen (18) als Schraubbolzen ausgebildet und in das T-Hammerprofil (17) eingeschraubt sind.

3. Rotierende elektrische Maschine nach Anspruch 1 oder 2, **dadurch gekennzeichnet, dass** in axialer Richtung jeweils mehrere Bolzen (18) mit derselben radialen Ausrichtung hintereinander angeordnet sind, und dass alle Bolzen (18) derselben radialen Ausrichtung an einem gemeinsamen T-Hammerprofil (17) befestigt bzw. in ein gemeinsames T-Hammerprofil (17) eingeschraubt sind.

4. Rotierende elektrische Maschine nach Anspruch 3, **dadurch gekennzeichnet, dass** alle Bolzen (18) derselben radialen Ausrichtung über ein gemeinsames Halteelement (21) von außen auf den Wickelkopf (15) einwirken.

## Claims

1. Rotating electric machine (10), in particular a hydrogenerator, comprising a rotor (11) which comprises a rotor laminate stack (12) which extends in the direction of a machine axis (20) and has a rotor winding (15a, b), wherein the rotor winding (15a, b) forms a winding head (15) in each case at the ends of the rotor laminate stack (12), said winding head being fastened to a winding head rim (13) - which is arranged concentrically within the winding head (15) and adjoins the rotor laminate stack (12) in the axial direction - in order to intercept centrifugal forces by means of bolts (18) which pass radially through the winding head (15), and wherein the fastening (16, 17, 18, 21) is designed to safely absorb axial expansions of the winding head (15), wherein the bolts (18) are fastened to the winding head rim (13) in each case on a T-shaped hammer profile (17) which extends in the axial direction, **characterised in that** the T-shaped hammer profile is mounted in an axially displaceable manner in an associated axial T-shaped groove in the winding head rim (13).

2. Rotating electric machine as claimed in claim 1, **characterised in that** the bolts (18) are designed as screw bolts and are screwed into the T-shaped hammer profile (17).

3. Rotating electric machine as claimed in claim 1 or 2, **characterised in that** in each case a plurality of bolts (18) with the same radial orientation are arranged one behind the other in the axial direction, and **in that** all of the bolts (18) with the same radial orientation are fastened to a common T-shaped hammer profile (17) or are screwed into a common T-shaped hammer profile (17).

4. Rotating electric machine as claimed in claim 3, **characterised in that** all of the bolts (18) with the same radial orientation act externally upon the winding head (15) via a common holding element (21).

## Revendications

1. Machine électrique rotative (10), en particulier hydrogénérateur, comprenant un rotor (11), lequel comprend un paquet de tôles rotor (12) pourvu d'un enroulement de rotor (15a,b) s'étendant dans la direction d'un axe de machine (20), l'enroulement de rotor (15a,b) formant aux extrémités du paquet de tôles rotor (12) respectivement une tête d'enroulement (15), qui est fixée, pour l'interception de forces centrifuges, au moyen de boulons (18) traversant radialement la tête d'enroulement (15) à un rebord (13) de tête d'enroulement disposé concentriquement à l'intérieur de la tête d'enroulement (15) et se raccordant dans la direction axiale au paquet de tôles rotor (12), et la fixation (16, 17, 18, 21) étant conçue pour la réception sûre de dilatations axiales de la tête d'enroulement (15),
les boulons (18) sur le rebord (13) de tête d'enroulement étant fixés respectivement sur un profilé en marteau en T (17) s'étendant axialement, **caractérisée en ce que** le profilé en marteau en T est logé de manière axialement coulissante dans une rainure en T axiale associée dans le rebord (13) de tête d'enroulement.

2. Machine électrique rotative selon la revendication 1, **caractérisée en ce que** les boulons (18) sont réalisés sous la forme de boulons filetés et sont vissés dans le profilé en marteau en T (17).

3. Machine électrique rotative selon la revendication 1 ou 2, **caractérisée en ce que**, dans la direction axiale, plusieurs boulons (18) présentant la même orientation radiale sont disposés respectivement les uns derrière les autres et **en ce que** tous les boulons (18) présentant la même orientation radiale sont fixés à un profilé en marteau en T (17) commun ou sont vissés dans un profilé en marteau en T (17) commun.

4. Machine électrique rotative selon la revendication 3, **caractérisée en ce que** tous les boulons (18) présentant la même orientation radiale agissent depuis l'extérieur, à travers un élément de support (21) commun, sur la tête d'enroulement (15).
